# DEMANDE DE BREVET EUROPEEN

(11) **EP 1 431 258 A2**
(43) Date de publication de la demande: **23.06.2004**
(21) Numéro de dépôt: 03104846.5
(22) Date de dépôt: 19.12.2003
(51) Int. Cl.: C04B 35/575, C04B 35/80

(54) **PROCEDE DE FABRICATION D'UN COMPOSITE A MATRICE CERAMIQUE ET A FIBRES DE CARBURE DE SILICIUM ET COMPOSITE AINSI OBTENU**

(30) Priorité: 19.12.2002 FR 0216181
(71) Demandeur: COMMISSARIAT A L'ENERGIE ATOMIQUE, 75752 Paris Cedex 15 (FR)
(72) Inventeur: TENEGAL, François, 75014, PARIS (FR); LEFEBVRE, Aline, 91150, ETAMPES (FR); MAYNE, Martine, 91470, LES MOLIERES (FR)

(57) **Abrégé**

L'invention se rapporte à un procédé de fabrication d'un composite constitué d'une matrice céramique et de fibres de carbure de silicium (SiC), qui comprend une opération de croissance des fibres de SiC dans un compact renfermant du silicium, du carbone, de l'azote et de l'oxygène et contenant du SiC sous forme de cristaux, ainsi qu'une opération de densification de ce compact, et dans lequel ladite opération de croissance des fibres de SiC est réalisée simultanément à l'étape de densification dudit compact.

L'invention se rapporte également au composite ainsi obtenu.

Applications : industries automobile, aéronautique, spatiale et nucléaire, et notamment pour la réalisation d'outils de coupe ou de forage, ou la réalisation de blindages.

## Description

### DOMAINE TECHNIQUE

La présente invention se rapporte à un procédé de fabrication d'un composite notamment nanostructuré, constitué d'une matrice céramique et de fibres de carbure de silicium (SiC) et au composite ainsi obtenu.

Ce composite se caractérise par des propriétés mécaniques remarquables, notamment en termes de dureté, de ténacité, de tenue à l'usure et de résistance aux chocs mécaniques et thermiques.

Il est donc susceptible de trouver de nombreuses applications mécaniques et thermomécaniques, en particulier dans les industries automobile, aéronautique, spatiale et nucléaire, comme la réalisation d'outils de coupe ou de forage, ou la réalisation de blindages.

### ETAT DE LA TECHNIQUE ANTERIEURE

Les céramiques renforcées par des fibres, et notamment par des fibres de carbure de silicium, sont connues pour présenter des propriétés mécaniques nettement supérieures à celles des céramiques monolithiques, en particulier à de hautes températures.

La présence de fibres dans les céramiques accroît, en effet, leur ténacité, c'est-à-dire leur résistance à la rupture, en gênant la progression des fissures, et rendent leur rupture moins brutale.

Il existe deux types de fibres de renfort en carbure de silicium : des fibres polycristallines d'une part, dont la longueur peut atteindre quelques centaines de mètres pour un diamètre d'une dizaine de microns, et des fibres monocristallines d'autre part, dont la longueur ne dépasse pas, en principe, quelques centaines de microns pour un diamètre voisin d'un micron. Ces fibres monocristallines sont communément désignées par le terme anglo-saxon "whiskers".

La fabrication de céramiques renforcées par des fibres polycristallines de carbure de silicium est actuellement réalisée par deux types de procédés, à savoir :
- des procédés qui consistent à réaliser une préforme fibreuse poreuse (c'est-à-dire un renfort de fibres de SiC, de la forme et aux dimensions de la pièce à fabriquer) et à soumettre cette préforme à un frittage, soit par infiltration d'un gaz précurseur de la matrice céramique dans un four de température élevée, soit par imprégnation d'une solution d'un polymère précurseur de ladite matrice, suivie d'une pyrolyse à haute température ; et
- des procédés qui consistent à compacter un mélange entre une matrice céramique et des fibres de SiC pour obtenir un compact poreux et à soumettre ce compact à un frittage par compression isostatique ou uniaxiale à chaud, ou à un frittage réactif.

Ces deux types de procédés ont en commun de requérir une manipulation des fibres, le premier pour la préparation, par exemple par tissage, de la préforme fibreuse, le deuxième pour la dispersion des fibres dans la matrice céramique. Or, des études expérimentales réalisées chez l'animal - et donc, potentiellement applicables à l'homme - montrent que ces fibres sont toxiques, au moins autant que les fibres d'amiante et ce, d'autant plus lorsqu'elles sont courtes, très fines et très volatiles. Leur manipulation à une échelle industrielle impose donc la mise au point et le respect de procédures hautement sécurisées.

Par ailleurs, les procédés par infiltration ou imprégnation d'une préforme fibreuse sont généralement longs et coûteux en raison de la multiplicité des étapes qu'ils comportent et du coût des fibres. En effet, plusieurs cycles de traitement (infiltration/imprégnation + traitement thermique) sont nécessaires pour augmenter progressivement la densité du matériau et le nombre de cycles est d'autant plus élevé que l'épaisseur des couches à densifier est plus importante. Ainsi, par exemple, la densification de préformes fibreuses de forte épaisseur peut requérir plusieurs mois de traitement.

Les procédés par frittage d'un compact poreux nécessitent, eux, d'obtenir une dispersion la plus homogène possible des fibres de SiC dans la matrice car tout défaut d'homogénéité du mélange résultant se traduit par la présence de défauts dans le compact, puis dans le composite final qui nuisent à la tenue mécanique de ce dernier. Or, cette étape de dispersion est extrêmement délicate à réaliser et difficile à optimiser notamment lorsqu'elle met en jeu des composants ultra-fins (poudres nanométriques et/ou fibres courtes ultra-fines) en raison des forces d'agglomération qui s'exercent entre ces composants.

On connaît, par ailleurs, des procédés permettant de renforcer des céramiques par des whiskers de SiC, par croissance de ces derniers *in situ*, c'est-à-dire au cours du processus de fabrication desdites céramiques.

L'un de ces procédés vise à obtenir la croissance *in situ* de whiskers de SiC dans une matrice de nitrure de silicium et consiste à préparer un mélange de poudres de Si₃N₄, de carbone et d'ajouts de frittage, puis à soumettre ce mélange à un traitement thermique pour faire croître les whiskers avant de procéder au frittage dudit mélange par pressage à chaud, la densification du composite étant achevée par une compression isostatique ou uniaxiale à chaud.

L'autre de ces procédés vise également à obtenir la croissance *in situ* de whiskers de SiC dans une matrice de nitrure de silicium, mais il comprend la préparation d'un compact à partir d'un mélange de poudres de Si, de SiO et de carbone, le traitement thermique à 1350°C, sous argon, de ce compact pour obtenir la formation de particules de SiC, sa nitruration par chauffage à 1400°C sous azote, son imprégnation par du phénol et son chauffage à 1600°C, sous argon, pour induire la croissance des whiskers et, enfin, sa densification par pressage uniaxial à 1800°C.

Bien que différents l'un de l'autre, ces deux procédés ont en commun, d'une part, de comprendre une opération de mélange, en l'espèce de poudres, susceptible de conduire à un défaut d'homogénéité du compact et, partant, du composite final, et, d'autre part, de réaliser la croissance des whiskers avant le processus de densification du composite.

On connaît, également, par EP-A-1 116 704 un procédé permettant de fabriquer un outil de coupe constitué d'une matrice de nitrure de silicium α sub-micrométrique renforcée par des particules ultrafines (de taille inférieure à 200 nm) de carbure de silicium.

Ce procédé consiste à soumettre à une compression isostatique à froid un granulat obtenu par atomisation-séchage d'un mélange contenant une poudre de α-Si₃N₄ et moins de 30% en poids d'une poudre de SiC, en présence d'ajouts de frittage et de divers additifs, puis à fritter le produit résultant à une température de 1800 à 1900°C, sous pression d'un gaz inerte (Ar) ou réactif (N₂). Le matériau ainsi obtenu est majoritairement constitué de α-Si₃N₄ et ne renferme pas des fibres, mais des particules de carbure de silicium.

Compte tenu de ce qui précède, l'invention a pour but de fournir un procédé qui permette de réaliser des composites à matrice céramique renforcée par des fibres de carbure de silicium, qui soit dénué des inconvénients présentés par les procédés de l'art antérieur, notamment en ce qu'il est exempt de toute manipulation de fibres de SiC et en ce qu'il peut être mis en oeuvre sans procéder à un mélange de poudres, ni utiliser un tel mélange, garantissant ainsi l'obtention de composites parfaitement homogènes et, partant, dotés de hautes performances mécaniques.

L'invention a, de plus, pour but de fournir un procédé qui permette, en outre, de réaliser facilement et rapidement des composites de grandes dimensions et ce, à un coût suffisamment bas pour que ce procédé soit applicable à une production de masse de tels composites.

### EXPOSÉ DE L'INVENTION

Ce but et d'autres encore sont atteints par la présente invention qui propose un procédé de fabrication d'un composite à matrice céramique et à fibres de carbure de silicium (SiC), qui comprend une opération de croissance des fibres de SiC dans un compact renfermant du silicium, du carbone, de l'azote et de l'oxygène et contenant du SiC sous forme de cristaux, ainsi qu'une opération de densification de ce compact, et dans lequel ladite opération de croissance des fibres de SiC est réalisée simultanément à l'étape de densification dudit compact.

Les Inventeurs ont, en effet, constaté qu'en soumettant un compact, qui renferme du silicium, du carbone, de l'azote et de l'oxygène et qui contient du SiC sous forme de cristaux, à un traitement approprié, il est possible d'induire simultanément la croissance de fibres de SiC dans ce compact et sa densification.

Conformément à l'invention, l'opération de croissance des fibres de SiC et l'opération de densification du compact sont, de préférence, réalisées en soumettant ce compact à un frittage par compression isostatique à chaud.

La compression isostatique à chaud ou HIP ("*Hot Isostatic Pressing*" en anglais) est une technique couramment employée dans les domaines de la céramique et de la métallurgie des poudres, qui consiste à exercer, le plus souvent au moyen d'un gaz, une pression identique dans toutes les directions sur une enceinte rigide dans laquelle se trouve une poudre tassée ou préalablement compactée, après dégazage de cette poudre pour en éliminer les espèces volatiles et fermeture hermétique de l'enceinte, la poudre étant simultanément chauffée à une température supérieure à 100°C et, généralement, comprise entre 500 et 2000°C.

Elle ne doit donc pas être confondue avec les techniques telles que celle utilisée dans EP-A-1 116 704, qui consistent à soumettre un compact aux effets conjoints d'une pression de gaz et de la température, mais dans lesquelles la pression de gaz est directement appliquée sur le compact.

Dans le procédé selon l'invention, le frittage par HIP du compact est, de préférence, réalisé :
- en plaçant le compact, par exemple en titane ou en tantale, de préférence après l'avoir recouvert d'une couche de nitrure de bore et d'une feuille de papier carbone afin d'éviter toute interaction avec l'élément de gainage, ou dans une gaine en verre du type Pyrex®,
- en dégazant le compact par chauffage à une température de l'ordre de 500 à 700°C, puis, après fermeture hermétique de la gaine,
- en chauffant le compact à une température de 1500 à 2000°C et en appliquant sur la gaine une pression de 1000 à 4000 bars et, de préférence, au moins égale à 2000 bars, de manière à obtenir une densification satisfaisante en un laps de temps pouvant aller d'un 1/4 d'heure à quelques heures.

Selon une disposition préférée de l'invention, le procédé comprend, préalablement au frittage du compact, une étape de préparation de ce compact, laquelle consiste à soumettre des granulés, qui renferment du silicium, du carbone, de l'azote et de l'oxygène et qui contiennent du SiC sous forme de cristaux, à une compression isostatique à froid.

La compression isostatique à froid ou CIP ("*Cold Isostatic Pressing"* en anglais) est une technique proche de la HIP, en ce sens qu'elle consiste également à exercer une pression identique dans toutes les directions sur une enceinte hermétiquement close dans laquelle se trouve une poudre tassée ou préalablement compactée, mais cette enceinte est généralement flexible, la pression est classiquement exercée au moyen d'un liquide, tandis que la poudre est à une température inférieure à 100°C et, le plus souvent, à température ambiante.

Dans le procédé selon l'invention, la préparation du compact par CIP est, de préférence, réalisée en remplissant de granulés une gaine constituée d'un élastomère ou de tout autre matériau apte à se déformer à température ambiante sous l'effet de pressions élevées sans se déchirer, puis, après tassement des granulés, pompage et fermeture hermétique de la gaine, en appliquant sur cette dernière une pression de 3000 à 13000 bars.

Avantageusement, la gaine est une gaine de caoutchouc naturel dont la paroi interne a été recouverte d'un lubrifiant tel que le nitrure de bore, propre à faciliter le dégainage du compact à l'issue de la CIP.

Au cours de la CIP des granulés, il est préférable, sans que cela soit toutefois obligatoire, d'utiliser une pression la plus élevée possible dans la gamme de pressions indiquée ci-dessus, de manière à obtenir un compact le plus cohésif possible.

Il est aussi préférable de faire monter cette pression et, surtout, de la faire redescendre relativement lentement afin d'éviter une relaxation brutale des contraintes conduisant à la rupture du matériau. Ainsi, par exemple, une pression de 13000 bars sera, de préférence, atteinte en une quinzaine de minutes, et réduite à 0 dans le même ordre de temps.

Conformément à l'invention, l'étape de préparation du compact peut être reconduite une ou plusieurs fois si nécessaire, par exemple, en cas de cassure du compact, auquel cas ce dernier est broyé, le broyat est tamisé et les granulés résultants sont de nouveau soumis à une CIP.

Pour la préparation du compact, on utilise, de préférence, des granulés d'un diamètre moyen allant de 0,1 à 500 µm et, mieux encore, de 1 à 400 µm.

Par ailleurs, on préfère que ces granulés soient obtenus par granulation d'une poudre nanométrique composite Si/C/N/O, présentant une teneur massique en SiC au moins égale à 50%.

Le procédé selon l'invention comprend donc de plus, préalablement à la préparation du compact, une étape de granulation d'une poudre nanométrique composite Si/C/N/O qui présente une teneur massique en SiC au moins égale à 50%.

Dans ce qui précède et dans ce qui suit, on entend par "*poudre nanométrique Si*/*C*/*N*/*O*", une poudre dont les grains ont un diamètre moyen au moins égal à 10 nm et inférieur à 100 nm, et dont tous les éléments ont été introduits lors de sa synthèse.

L'utilisation d'une poudre de ce type présente, en effet, l'avantage majeur de supprimer la nécessité de procéder à un mélange de poudres pour réunir tous les constituants chimiques nécessaires à la fabrication du composite, ou même d'utiliser un mélange de poudres prêt à l'emploi et, par voie de conséquence, de garantir une parfaite homogénéité des granulés, du compact et, au final, dudit composite.

Selon une autre disposition préférée de l'invention, la poudre nanométrique composite Si/C/N/O à partir de laquelle sont préparés les granulés est, de préférence, une poudre synthétisée par pyrolyse laser.

Cette technique de synthèse de poudres, dont le principe repose sur l'interaction en flux croisés entre l'émission d'un laser de puissance CO₂ et un mélange réactionnel constitué de précurseurs gazeux ou liquides permet, en effet, un ajustement des caractéristiques des poudres obtenues, tant en termes de composition, de structure que de taille des grains. Il est ainsi possible d'obtenir, par cette technique, une poudre présentant exactement la granulométrie, les proportions massiques Si/C/N/O et la teneur massique en SiC que l'on désire et, à partir de là, un composite présentant exactement les caractéristiques recherchées.

De plus, la pyrolyse laser permet la fabrication de poudres à des taux de production horaires élevés et à des coûts raisonnables, en sorte que l'utilisation de poudres synthétisées par cette technique dans le procédé selon l'invention permet d'envisager une application de ce dernier à la production de masse de composites et, en particulier, de composites de grandes dimensions.

De préférence, la poudre composite Si/C/N/O à partir de laquelle sont préparés les granulés a des grains d'un diamètre moyen de 10 à 100 nm et présente une teneur massique en SiC au moins égale à 70% et, mieux encore, de l'ordre de 80 à 90%.

Conformément à l'invention, la granulation de cette poudre peut être réalisée aussi bien par voie sèche que par voie humide, le but de cette granulation étant d'obtenir un empilement le plus compact possible des grains de poudre.

Par voie sèche, elle est, de préférence, réalisée en soumettant la poudre à une CIP, suivie d'un broyage, manuel ou mécanique, du produit résultant et d'un ou plusieurs tamisages du broyat ainsi obtenu, de manière à ne garder que les granulés de taille désirée.

Cette CIP est avantageusement conduite en remplissant de poudre une gaine constituée d'un élastomère ou de tout autre matériau apte à se déformer à température ambiante sous l'effet de pressions élevées sans se déchirer, puis, après tassement de cette poudre, pompage et fermeture hermétique de la gaine, en appliquant sur cette dernière une pression de 50 à 13000 bars et, de préférence, de 500 à 3500 bars.

Par voie humide, la granulation de la poudre est, de préférence, réalisée par atomisation-séchage ("*Spray drying*" en anglais), c'est-à-dire en dispersant cette poudre dans un solvant et en pulvérisant la suspension ainsi obtenue dans une chambre parcourue par un courant d'air chaud. Facultativement, la suspension de poudre peut être soumise, avant pulvérisation, à un traitement par des ultrasons pour augmenter la dispersion des grains de poudre et favoriser ainsi leur empilement ultérieur.

Qu'elle soit effectuée par voie sèche ou par voie humide, l'étape de granulation de la poudre peut être répétée une ou plusieurs fois, si nécessaire.

Il est également possible de combiner deux méthodes de granulation de nature différente comme, par exemple, de soumettre la poudre à une atomisation-séchage, puis à une CIP suivie d'un broyage et d'un tamisage.

Dans un mode de mise en oeuvre particulièrement préféré du procédé selon l'invention, celui-ci comprend les étapes suivantes :
a) soumettre une poudre nanométrique composite Si/C/N/O, synthétisée par pyrolyse laser et présentant une teneur massique en SiC au moins égale à 50%, à une CIP, à température ambiante et à une pression de 50 à 13000 bars, suivie d'un broyage du produit résultant et d'un tamisage du broyat ainsi obtenu, pour obtenir des granulés de diamètre moyen de 0,1 à 500 µm ;
b) préparer un compact en soumettant ces granulés à une CIP, à température ambiante et en utilisant une pression de 3000 à 13000 bars ; et
c) fritter ce compact en le soumettant à une HIP, à une température de 1500 à 2000°C et en utilisant une pression de 1000 à 4000 bars ; les étapes a) et b) pouvant être reconduites une ou plusieurs fois.

On obtient ainsi, à l'issue de l'étape b), un compact dense à plus de 50%, c'est-à-dire qui présente une densité supérieure à 50% de sa densité théorique, cette dernière étant définie comme la densité présentée par une pièce de même forme que ce compact, qui serait constituée de la même poudre nanométrique composite que celle à partir de laquelle il est obtenu, mais qui ne comporterait aucune porosité.

Par comparaison, les densités des compacts obtenus dans l'art antérieur à partir de poudres nanométriques du type poudres de carbure ou de nitrure, se situent généralement autour de 30 à 40% de leur densité théorique.

Ce gain en densité permet de réaliser l'étape c), c'est-à-dire le frittage du compact, à des températures plus basses que celles nécessaires pour des densités plus faibles et, notamment, d'utiliser, dans la gamme de températures ci-dessus mentionnée, des températures de l'ordre de 1600-2000°C.

Conformément à l'invention, le procédé peut encore comprendre une ou plusieurs étapes complémentaires comme, par exemple :
- une étape de minéralisation de la poudre nanométrique composite Si/C/N/O par traitement thermique, en particulier à des températures de 600 à 1500°C, en vue d'éliminer de cette poudre certaines espèces chimiques susceptibles de nuire ultérieurement à la densification du compact ; et/ou
- une étape de traitement thermique du composite, en particulier à des températures de 1500 à 2500°C, sous atmosphère inerte (argon par exemple) ou réactive, en vue d'en consolider la microstructure et/ou d'induire une croissance additionnelle des fibres de SiC ; et/ou
- une étape d'infiltration du composite par un gaz précurseur de la matrice céramique, ou d'imprégnation du composite par une solution d'un polymère précurseur de la matrice céramique, en vue d'augmenter la densité du composite, cette étape d'infiltration/imprégnation pouvant être effectuée, soit sur le composite tel qu'obtenu à l'issue de la densification du compact, soit après avoir soumis ce composite à un traitement thermique complémentaire tel qu'évoqué ci-dessus.

En plus des avantages déjà énoncés, le procédé de fabrication d'un composite à matrice céramique et à fibres de carbure de silicium, objet de l'invention, présente encore ceux d'être simple et rapide à mettre en oeuvre, de ne nécessiter que des équipements couramment utilisés dans les domaines de la céramique et de la métallurgie des poudres, et de conduire à l'obtention de composites aux propriétés mécaniques particulièrement remarquables, notamment en termes de dureté, de ténacité, de tenue à l'usure et de résistance aux chocs mécaniques et thermiques.

L'invention a, donc, aussi pour objet un composite à matrice céramique et à fibres de SiC, susceptible d'être obtenu par le procédé tel que précédemment défini.

Avantageusement, ce composite se compose de silicium, de carbone, d'azote et d'oxygène, présente une teneur massique en SiC au moins égale à 50%, et les fibres de SiC présentent un aspect ratio supérieur à 5 et inférieur à 500.

Dans ce qui précède et dans ce qui suit, on entend par "*aspect ratio*" d'une fibre, le rapport entre la longueur et la largeur de cette fibre.

De préférence, le composite présente une teneur massique en SiC au moins égale à 70% et, mieux encore, de l'ordre de 80 à 90%, et les fibres de SiC qu'il renferme présentent un aspect ratio supérieur à 10 et inférieur à 100.

Les fibres de SiC présentes dans le composite peuvent aisément être révélées en observant au microscope électronique à balayage (MEB), à effet de champ ou non, des échantillons de ce composite après avoir soumis ces échantillons à une attaque chimique de type Murakami, qui est habituellement utilisée pour révéler les carbures. Pour ce faire, les échantillons, préalablement polis ou non, sont trempés dans le mélange Murakami (1/3 d'eau + 1/3 de soude + 1/3 de ferricyanure de potassium, le tout porté à ébullition) une dizaine de minutes. Lorsque le composite a été soumis à un traitement thermique additionnel à une température supérieure à 1800°C, alors la croissance des fibres de SiC est généralement telle que leur observation au MEB ne nécessite plus de procéder à une attaque chimique préalable des échantillons.

Les fibres de SiC du composite peuvent également être révélées en observant au microscope électronique en transmission (MET) des échantillons obtenus par broyage au mortier d'une pastille de 1 mm d'épaisseur de ce composite. Dans ce cas, aucune attaque chimique du composite n'est réalisée.

Conformément à l'invention, le composite présente, de préférence, une densité supérieure à 50% de sa densité théorique.

Compte tenu de ses propriétés, le composite selon l'invention est susceptible de trouver de nombreuses applications mécaniques et thermomécaniques, notamment dans les industries automobile, aéronautique, spatiale et nucléaire, et en particulier dans la réalisation d'outils de coupe ou de forage, et la réalisation de blindages.

Outre les dispositions qui précèdent, l'invention comprend encore d'autres dispositions qui ressortiront du complément de description qui suit, qui se réfère à des exemples de mise en oeuvre du procédé selon l'invention et de composites obtenus par ce procédé.

Ce complément de description est donné à titre illustratif, et non limitatif, de l'invention et en référence aux dessins annexés.

### BRÈVE DESCRIPTION DES DESSINS

La figure 1 montre trois images prises au MEB sur une surface polie, ayant été soumise à une attaque chimique, d'un composite obtenu par le procédé selon l'invention, la partie A de cette figure correspondant à un grandissement de 1000, la partie B à un grandissement de 1460 et la partie C à un grandissement de 19600.

La figure 2 montre une image, correspondant à un grandissement de 500000, prise au microscope électronique à transmission (MET) sur une pastille broyée d'un composite obtenu par le procédé selon l'invention.

La figure 3 montre les spectres de diffraction aux rayons X d'un composite obtenu par le procédé selon l'invention et de la poudre composite Si/C/N/O à partir duquel ce composite a été fabriqué, la partie A correspondant au spectre du composite, la partie B au spectre de la poudre. Dans les deux cas, la présence de nanocristaux de SiC est révélée.

La figure 4 montre une image, correspondant à un grandissement de 5000, prise au MEB à effet de champ sur une surface polie, ayant été soumise à une attaque chimique, d'un composite obtenu par le procédé selon l'invention et ayant subi un traitement thermique complémentaire à 1800°C, pendant 5 heures et sous argon.

La figure 5 montre le spectre de diffraction aux rayons X du composite dont la microstructure est représentée sur la figure 4.

La figure 6 montre une image, correspondant à un grandissement de 50, prise au MEB à effet de champ sur une surface polie d'un composite obtenu par le procédé selon l'invention et ayant subi un traitement thermique complémentaire à 2100°C, pendant 5 heures et sous argon.

La figure 7 montre le spectre de diffraction aux rayons X du composite dont la microstructure est représentée sur la figure 6.

### EXPOSÉ DÉTAILLÉ DE MODES DE MISES EN OEUVRE PARTICULIERS DU PROCEDE SELON L'INVENTION

### Exemple 1 :

On a réalisé un composite à matrice céramique et à fibres de SiC conformément à l'invention :
1. en synthétisant une poudre nanométrique composite Si/C/N/O par pyrolyse laser comme décrit par Cauchetier et *al*. (*Journal of the European Ceramic Society,* **8,** 4, page 215, 1991), et en utilisant, comme mélange réactionnel, un mélange de silane (SiH₄), d'éthylène (C₂H₂) et d'ammoniac (NH₃) ; la poudre ainsi obtenue présente une densité de 2,9 ; elle renferme, en proportions massiques, 64% de silicium, 24% de carbone, 4% d'azote et 5% d'oxygène, et présente une teneur massique en SiC d'environ 68% ; ses grains ont un diamètre moyen de 20 nm ;
2. en soumettant cette poudre à deux granulations successives, chaque granulation comprenant une opération de compression isostatique à froid de la poudre dans une gaine de latex (à 1500 bars pour la première granulation, à 13000 bars pour la seconde granulation), puis une opération de broyage du produit résultant à l'aide d'un mortier, suivie d'une opération de tamisage du broyat afin de ne garder que les granulés de diamètre inférieur à 400 µm ;
3. en soumettant ces granulés à une compression isostatique à froid, à 3500 bars et pendant 1 minute, dans une gaine en latex dont la paroi interne a été préalablement recouverte de nitrure de bore ; le compact ainsi obtenu est dense à 46%, c'est-à-dire qu'il présente une densité égale à 46% de sa densité théorique ; et
4. en plaçant ce compact dans une gaine en titane en l'ayant au préalable recouvert d'une couche de nitrure de bore et d'une feuille de papier carbone, et, après un dégazage de 12 heures à 600°C, en le soumettant à un frittage par compression isostatique à chaud, à 1600°C, sous une pression de 2000 bars et pendant 3 heures.

Le composite ainsi obtenu est dense à 70%.

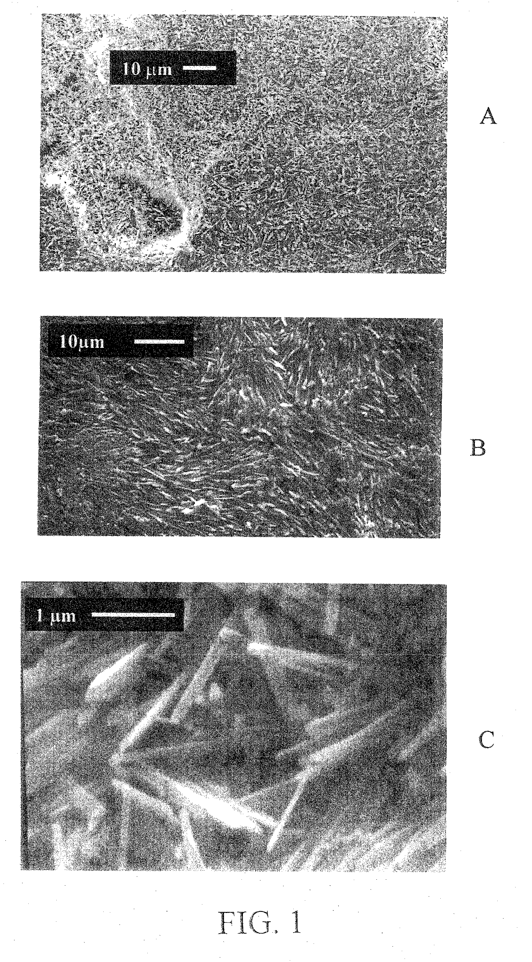

La figure 1 montre des images prises au MEB à effet de champ sur une surface polie de ce composite, après avoir soumis cette surface à une attaque chimique de type Murakami. La partie A de la figure 1 correspond à un grandissement de 1000, la partie B à un grandissement de 1400, et la partie C à un grandissement de 19600.

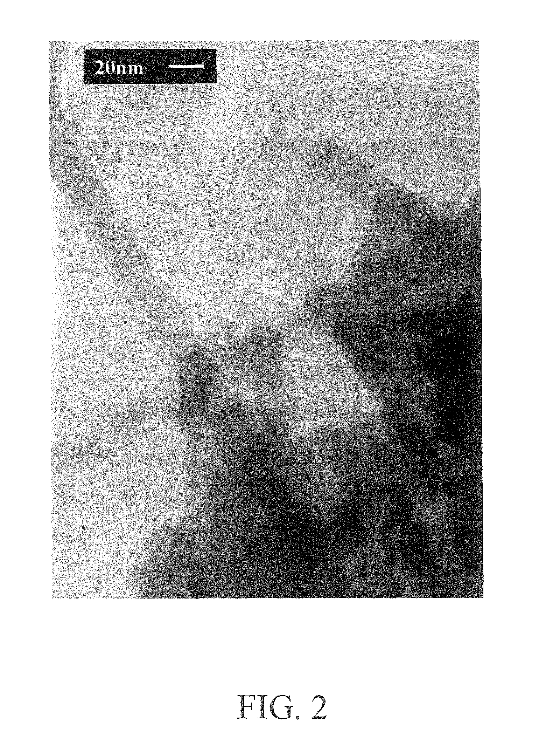

La figure 2, elle, montre une image, correspondant à un grandissement de 500000, prise au MET sur un échantillon obtenu par broyage d'une pastille de 1 mm d'épaisseur du composite.

Comme visible sur ces figures, le composite présente de nombreuses fibres de SiC ultra-fines, courtes et partiellement orientées, parmi lesquelles se trouvent des fibres nanocristallines, formées de grains nanométriques (de l'ordre de 15 à 25 nm).

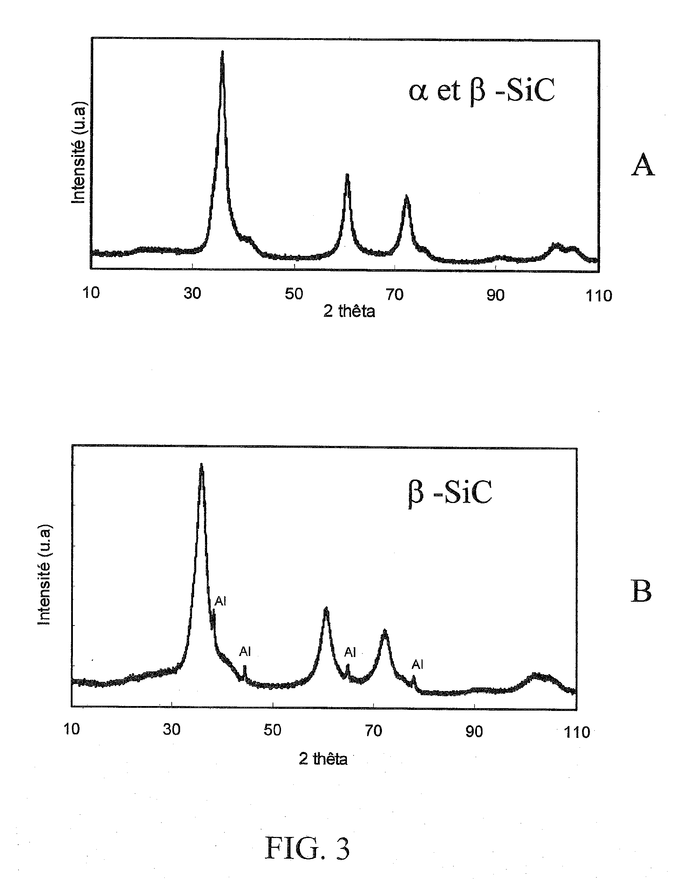

Par ailleurs, la figure 3 montre le spectre de diffraction aux rayons X du composite (partie A) et celui de la poudre nanométrique composite à partir de laquelle il a été fabriqué (partie B). Sur la figure B, les pics marqués Al correspondent aux signaux provenant du support d'analyse en aluminium.

Ainsi que le montre cette figure, la taille des grains de SiC demeure faible (inférieure à 100 nm) dans le composite.

### Exemple 2 :

On a réalisé un autre composite à matrice céramique et à fibres de SiC conformément à l'invention :
1. en soumettant une poudre composite Si/C/N/O analogue à celle utilisée dans l'exemple 1, à une granulation par compression isostatique à froid à 500 bars dans une gaine de latex, puis broyage du produit résultant à l'aide d'un mortier et tamisage du broyat afin de ne garder que les granulés de diamètre inférieur à 400 µm ;
2. en soumettant ces granulés à une compression isostatique à froid, à 13000 bars, dans une gaine en latex dont la paroi interne a été préalablement recouverte de nitrure de bore ; le compact ainsi obtenu est dense à 52% ; et
3. en plaçant ce compact dans une gaine en titane en l'ayant au préalable recouvert d'une couche de nitrure de bore et d'une feuille de papier carbone, et, après un dégazage de 12 heures à 600°C, en le soumettant à un frittage par compression isostatique à chaud, à 1620°C et sous une pression de 2000 bars, pendant 3 heures, dans une gaine en titane.

Le composite ainsi obtenu est dense à 77%.

Il présente une microstructure du même type que celle du composite fabriqué dans l'exemple 1.

### Exemple 3 :

Le composite à matrice céramique et à fibres de SiC élaboré dans l'exemple 1 a été soumis à un traitement thermique complémentaire à 1800°C, pendant 5 heures et sous argon.

Le composite résultant est dense à 53,3%.

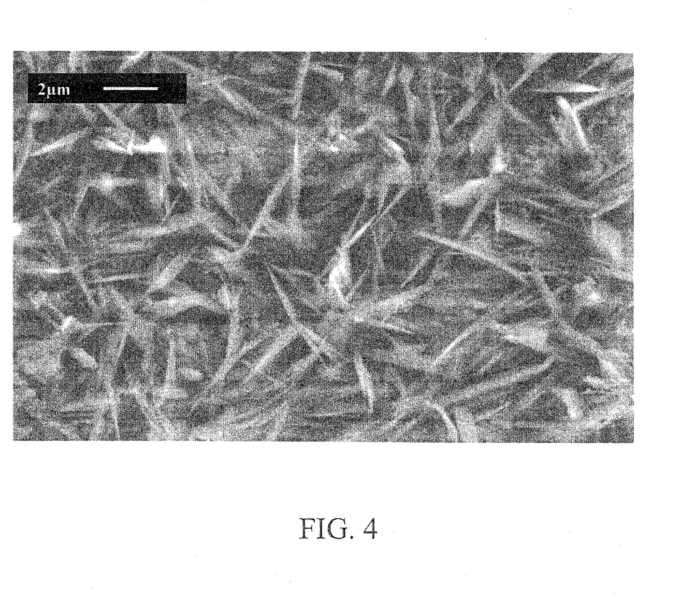

Comme visible sur la figure 4, qui montre une image, correspondant à un grandissement de 5000, prise au MEB à effet de champ sur une surface polie de ce composite, après une attaque chimique de type Murakami de ladite surface, celui-ci présente le même type de fibres de SiC que le composite élaboré dans l'exemple 1.

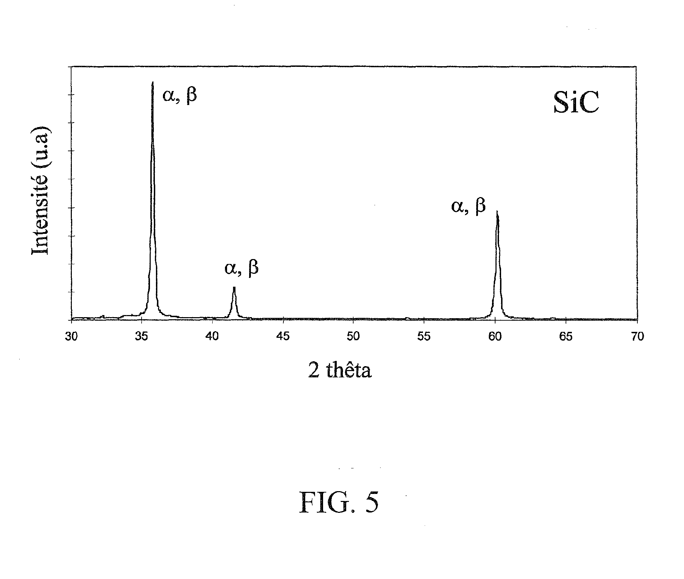

Par ailleurs, ainsi que le montre la figure 5, le spectre de diffraction aux rayons X du composite obtenu dans le présent exemple met en évidence une croissance de la taille des grains de carbure de silicium par rapport au composite élaboré dans l'exemple 1.

### Exemple 4 :

Le composite à matrice céramique et à fibres de SiC élaboré dans l'exemple 1 a été soumis à un traitement thermique complémentaire à 2100°C, pendant 5 heures et sous argon.

Le composite résultant est dense à 52,8%.

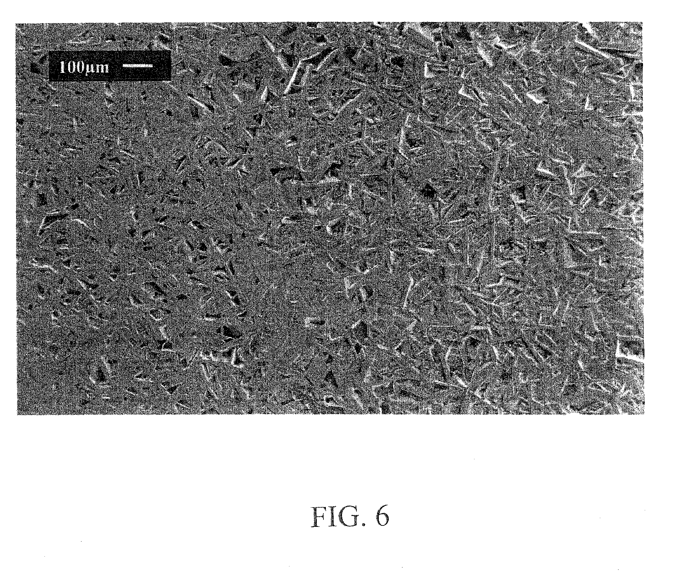

Comme visible sur la figure 6, qui montre une image, correspondant à un grandissement de 50, prise au MEB à effet de champ sur une surface polie de ce composite, ce dernier présente des fibres de SiC de plusieurs dizaines de microns de long. Le composite a donc subi une croissance des fibres au cours du traitement thermique additionnel.

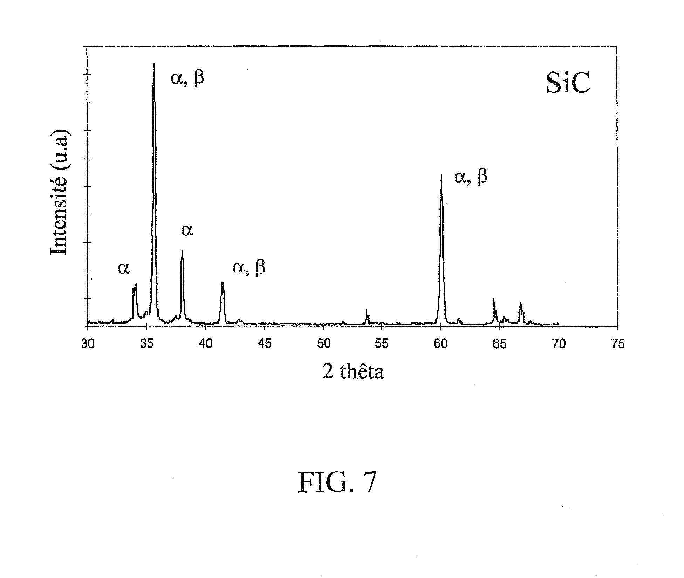

Par ailleurs, comme visible sur la figure 7, le spectre de diffraction aux rayons X du composite obtenu dans le présent exemple met en évidence une croissance de la taille des grains de carbure de silicium par rapport aux composites obtenus dans les exemples 1 et 3.

## Revendications

1. Procédé de fabrication d'un composite à matrice céramique et à fibres de carbure de silicium (SiC), qui comprend une opération de croissance des fibres de SiC dans un compact renfermant du silicium, du carbone, de l'azote et de l'oxygène et contenant du SiC sous forme de cristaux, ainsi qu'une opération de densification de ce compact, et dans lequel ladite opération de croissance des fibres de SiC est réalisée simultanément à l'étape de densification dudit compact.

2. Procédé selon la revendication 1, dans lequel la croissance des fibres de SiC et la densification du compact sont obtenues en soumettant ce compact à un frittage par compression isostatique à chaud (HIP).

3. Procédé selon la revendication 2, dans lequel le frittage du compact est réalisé à une température de 1500 à 2000°C et en utilisant une pression de 1000 à 4000 bars et, de préférence, au moins égale à 2000 bars.

4. Procédé selon l'une quelconque des revendications précédentes, qui comprend une étape de préparation du compact, laquelle consiste à soumettre des granulés renfermant du silicium, du carbone, de l'azote et de l'oxygène et contenant du SiC sous forme de grains, à une compression isostatique à froid (CIP).

5. Procédé selon la revendication 4, dans lequel la compression isostatique à froid des granulés est réalisée à température ambiante et en utilisant une pression de 3000 à 13000 bars.

6. Procédé selon la revendication 4 ou la revendication 5, dans lequel les granulés ont un diamètre moyen allant de 0,1 à 500 µm et, de préférence, de 1 à 400 µm.

7. Procédé selon l'une quelconque des revendications 4 à 6, dans lequel les granulés sont obtenus à partir d'une poudre nanométrique composite Si/C/N/O, présentant une teneur massique en carbure de silicium au moins égale à 50%.

8. Procédé selon l'une quelconque des revendications précédentes, qui comprend une étape de granulation d'une poudre nanométrique composite Si/C/N/O, présentant une teneur massique en carbure de silicium au moins égale à 50%.

9. Procédé selon la revendication 7 ou la revendication 8, dans lequel la poudre nanométrique composite Si/C/N/O est une poudre synthétisée par pyrolyse laser.

10. Procédé selon l'une quelconque des revendications 7 à 9, dans lequel le diamètre moyen des grains de la poudre nanométrique composite Si/C/N/O est de 10 à 100 nm.

11. Procédé selon l'une quelconque des revendications 7 à 10, dans lequel la poudre nanométrique composite Si/C/N/O présente une teneur massique en SiC au moins égale à 70% et, de préférence, de 80 à 90%.

12. Procédé selon l'une quelconque des revendications 8 à 11, dans lequel la granulation de la poudre nanométrique composite Si/C/N/O est réalisée en soumettant cette poudre à une compression isostatique à froid (CIP), suivie d'un broyage du produit résultant et d'un tamisage du broyat ainsi obtenu.

13. Procédé selon la revendication 12, dans lequel la compression isostatique à froid de la poudre est réalisée à température ambiante et en utilisant une pression de 50 à 13000 bars et, de préférence, de 500 à 3500 bars.

14. Procédé selon l'une quelconque des revendications 8 à 12, dans lequel la granulation de la poudre nanométrique composite Si/C/N/O est réalisée en soumettant cette poudre à une atomisation-séchage.

15. Procédé selon l'une quelconque des revendications précédentes, comprenant les étapes suivantes :
a) soumettre une poudre nanométrique composite Si/C/N/O, synthétisée par pyrolyse laser et présentant une teneur massique en SiC au moins égale à 50%, à une compression isostatique à froid, à température ambiante et à une pression de 50 à 13000 bars, suivie d'un broyage du produit résultant et d'un tamisage du broyat ainsi obtenu, pour obtenir des granulés d'un diamètre moyen de 0,1 à 500 µm ;
b) préparer un compact en soumettant ces granulés à une compression isostatique à froid, à température ambiante et en utilisant une pression de 3000 à 13000 bars ; et
c) fritter ce compact en le soumettant à une compression isostatique à chaud, à une température de 1500 à 2000°C et en utilisant une pression de 1000 à 4000 bars ;
les étapes a) et b) pouvant être reconduites une ou plusieurs fois.

16. Procédé selon l'une quelconque des revendications 8 à 15, qui comprend de plus, préalablement à l'étape de granulation de la poudre nanométrique composite Si/C/N/O, une étape de traitement thermique de cette poudre à une température de 600 à 1500°C.

17. Procédé selon l'une quelconque des revendications précédentes, qui comprend de plus, postérieurement à la densification du compact, une étape de traitement thermique du composite résultant de cette densification à une température de 1500 à 2500°C.

18. Procédé selon l'une quelconque des revendications précédentes, qui comprend de plus, postérieurement à la densification du compact, une étape d'infiltration du composite par un gaz précurseur de la matrice céramique, ou d'imprégnation de ce composite par une solution d'un polymère précurseur de la matrice céramique, ladite étape d'infiltration/imprégnation étant éventuellement effectuée après avoir soumis ledit composite à un traitement thermique à une température de 1500 à 2500°C.

19. Composite à matrice céramique et à fibres de carbure de silicium susceptible d'être obtenu par un procédé tel que défini dans l'une quelconque des revendications 1 à 18.

20. Composite selon la revendication 19, qui se compose de silicium, carbone, azote et oxygène et présente une teneur massique en carbure de silicium au moins égale à 50%, et dans lequel les fibres de carbure de silicium présentent un aspect ratio supérieur à 5 et inférieur à 500.

21. Composite selon la revendication 19 ou la revendication 20, qui présente une teneur massique en SiC au moins égale à 70% et, de préférence, de 80 à 90%.

22. Composite selon l'une quelconque des revendications 19 à 21, dans lequel les fibres de carbure de silicium présentent un aspect ratio supérieur à 10 et inférieur à 100.

23. Composite selon l'une quelconque des revendications 19 à 22, qui présente une densité supérieure à 50% de sa densité théorique.
